# EUROPÄISCHE PATENTANMELDUNG

(11) **EP 0 899 501 A1**
(43) Veröffentlichungstag der Anmeldung: **03.03.1999**
(21) Anmeldenummer: 97114726.9
(22) Anmeldetag: 26.08.1997
(51) Int. Cl.: F16N 39/04, F28F 13/12

(54) **Beheizung des Öles in einem Ölumlaufschmiersystem**

(30) Priorität: 26.08.1997 DE 19634454
(71) Anmelder: Safematic Schmiertechnik GmbH, 82319 Starnberg (DE)
(72) Erfinder: Ekman, Hans, 82319 Starnberg (DE)

(57) **Zusammenfassung**

Gegenstand ist die
Beheizung des Öles in einem Ölumlaufschmiersystem mit einem zwischen Rücklauf und Vorlauf des Öles des Schmiersystems angeordneten Behälter (1), welcher für die Beheizung des Öles mit einer Heizung (19), die als Wärmeträger Heißwasser oder Niederdruckdampf verwendet, ausgerüstet ist, die einen Wärmetauscher aufweist, der im Boden des Behälters angeordnet ist, der auf der Wärmeträgerseite so ausgebildet ist, daß dem Wärmeträger eine turbulente Strömung im Wärmetauscher aufgezwungen ist.

Außerdem
- kann der der Wärmetauscher ein Plattenwärmetauscher sein,
- der Plattenwärmetauscher auf der Wärmeträgerseite mit engen Passagen ausgerüstet werden,
- der gleiche Wärmetauscher zusätzlich in den Wänden des Behälters angeordnet werden,
- der Wärmetauscher der Heizung (19) als Kühler des Vorlaufs verwendet und Kaltwasser als Wärmeträger verwendet werden kann.

## Beschreibung

Die beschriebene Innovation betrifft eine bessere und ökonomischere Beheizung des Öles in Ölumlaufschmiersystemen als bisher, insbesondere für in der Prozessindustrie installierte Schmiersysteme, wo meistens ein Überfluß von Heißwasser und/oder Niederdruckdampf zu Verfügung steht.

### Stand der Technik.

Das Öl im Behälter eines Ölumlaufschmiersystems wird bekanntlich erwärmt entweder elektrisch mit Heizstäben im Behälter mit oder ohne Schutzrohr oder mit Heißwasser in einer Doppelbodenkonstruktion des Behälters, wobei in dem unteren Teil Heißwasser oder Niederdruckdampf zugeführt werden. Das Heißwasser kann wiederum elektrisch mit Heizstäben beheizt werden entweder direkt im Behälter oder durch einen externen Wärmetauscher.

Das Problem der herkömmlichen Wasserheizung ist, daß durch das im Doppelboden des Behälters langsam laminar fließende Wasser die Wärmeübertragung uneffektiv ist und dazu führt, daß die Aufheizung des Öls in der Anlaufphase einer Anlage (z.B. einer Papiermaschine) zu langsam ist. Deshalb müssen zusätzliche Heizsysteme, beispielsweise zusätzliche Wärmetauscher Dampf/Öl im Vorlauf des Schmiersystems, eingebaut werden, was die Installations- und Betriebskosten erhöht.

Das Problem bei der direkten Elektroheizung ist die zusätzlich installierte Leistung (Heißwasser und/oder Niederdruckdampf ist ja sowieso vorhanden), die die Installation und den Betrieb des Schmiersystems verteuert.

Da das Öl die Lager und Getriebe nicht nur schmieren, sondern auch kühlen soll, also auch als Wärmeträgermedium agiert, beinhaltet ein Ölumlaufschmiersystem normalerweise auch einen Kühler im Vorlauf.

### Aufgabe und Lösung

Ausgehend von den oben beschriebenen Nachteilen der Beheizung des Öles in den Ölumlaufschmiersystemen nach dem Stand der Technik ist es Aufgabe dieses Gegenstands, das Öl wirtschaftlich bei einfachem konstruktiven Installations- und Anlagenaufwand zu erwärmen. Die Erwärmung des Öles in der Anlaufphase einer zu schmierenden Anlage ist zu beschleunigen.

Gelöst wird diese Aufgabe durch eine Beheizung des Öles in einem Ölumlaufschmiersystem mit den Merkmalen nach Anspruch 1. Vorteilhafte Ausführungen sind in den Unteransprüchen dargestellt.

Die Erfindung betrifft die Verwendung eines Wärmetauschers in Plattenbauweise, der im Boden des Behälters und falls notwendig zusätzlich in den Wanden des Behälters integriert ist. Durch die Konstruktion des Wärmetauschers, die dem Prinzip eines Plattenwärmetauschers mit engen Passagen auf der Wärmeträgerseite folgt, die dem Wärmeträgermedium (Niederdruckdampf, Heißwasser, ggf. Kaltwasser) eine turbulente Strömung aufzwingt und damit eine erhebliche Steigerung des K-Werts (W/m2/°K) des Wärmetauschers ermöglicht, wird der Heizvorgang soweit zeitlich verkürzt und effektivisiert, daß keine zusätzlichen Heizungssysteme erforderlich sind. Aus demselben Grund (hoher K-Wert) kann dieser Wärmetauscher auch den üblicherweise im Vorlauf des Schmiersystems angeordneten Kühler ersetzen. Der Bodenwärmetauscher wird dann wechselweise zur Heizung oder Kühlung des Öles verwendet. Dies führt hier zu einer Systemvereinfachung und damit zu wesentlichen Kosteneinsparungen.

### Ausführungsbeispiel

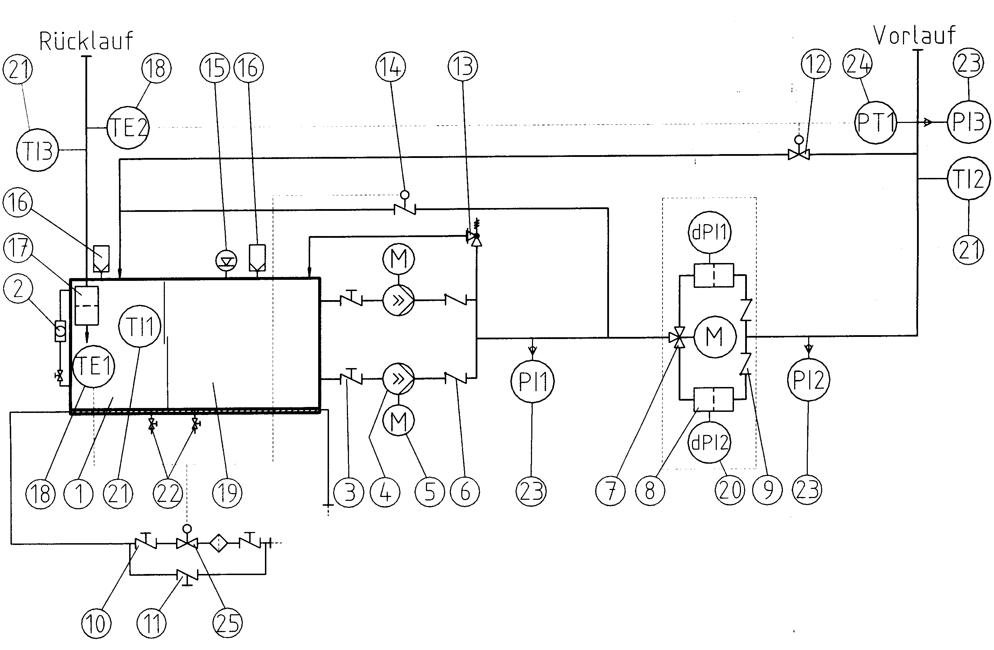

Ein Ausführungsbeispiel der Beheizung des Öles in einem Ölumlaufschmiersystem ist in der einzigen Zeichnung dargestellt. Es zeigen dort:
- 1: Behälter, Tank
- 2: Füllstandsanzeige
- 3: Absperrklappe
- 4: Schraubenspindelpumpe
- 5: Motor
- 6: Rückschlagklappe
- 7: Absperrhahn
- 8: Ölfilter
- 9: Rückschlagventil
- 10: Absperrklappe
- 11: Bypassklappe
- 12: Kugelsektorventil mit Antrieb
- 13: Sicherheitsventil
- 14: Bypassklappe mit Antrieb
- 15: Niveaukontrolle
- 16: Tankbelüftung
- 17: Rücklaufsieb, Grobfilter
- 18: Temperaturaufnehmer
- 19: Dampfbodenheizung
- 20: Differenzdruckanzeige
- 21: Temperaturanzeige
- 22: Ablasshähne
- 23: Manometer mit Minimessanschluß
- 24: Drucktransmitter
- 25: Regelventil für Bodenheizung

## Patentansprüche

1. Beheizung des Öles in einem Ölumlaufschmiersystem mit einem zwischen Rücklauf und Vorlauf des Öles des Schmiersystems angeordneten Behälter (1), welcher für die Beheizung des Öles mit einer Heizung (19), die als Wärmeträger Heißwasser oder Niederdruckdampf verwendet, ausgerüstet ist, die einen Wärmetauscher aufweist, der im Boden des Behälters angeordnet ist, der auf der Warmeträgerseite so ausgebildet ist, daß dem Wärmeträger eine turbulente Strömung im Wärmetauscher aufgezwungen ist.

2. Beheizung des Öles in einem Ölumlaufschmiersystem nach Anspruch 1, dadurch gekennzeichnet, daß der Wärmetauscher ein Plattenwärmetauscher ist.

3. Beheizung des Öles in einem Ölumlaufschmiersystem nach Anspruch 2, dadurch gekennzeichnet, daß der Plattenwärmetauscher auf der Wärmeträgerseite mit engen Passagen ausgerüstet ist.

4. Beheizung des Öles in einem Ölumlaufschmiersystem nach einem der vorherigen Ansprüche, dadurch gekennzeichnet, daß der gleiche Wärmetauscher zusätzlich in den Wänden des Behälters angeordnet ist.

5. Beheizung des Öles in einem Ölumlaufschmiersystem nach einem der vorherigen Ansprüche, dadurch gekennzeichnet, daß der Wärmetauscher der Heizung (19) als Kühler des Vorlaufs verwendet ist und daß Kaltwasser als Wärmeträger verwendet ist.
